Europäisches Patentamt

European Patent Office

Office européen des brevets

(19)

(11) Publication number: 0 370 695
A2

(12) EUROPEAN PATENT APPLICATION

(21) Application number: 89311863.8

(51) Int. Cl.⁵: B29C 47/06, B29C 47/28

(22) Date of filing: 16.11.89

(30) Priority: 23.11.88 US 276354

(43) Date of publication of application:
30.05.90 Bulletin 90/22

(84) Designated Contracting States:
AT BE CH DE ES FR GB IT LI NL SE

(71) Applicant: AMERICAN NATIONAL CAN
COMPANY
8770 West Bryn Mawr Avenue
Chicago, Illinois 60631(US)

(72) Inventor: Wang, James C.
15 Massasoit Avenue
Norton Massachusetts 02766(US)
Inventor: Kaas, Roger L.
1830 Eagle Drive
Neenah Wisconsin 54956(US)
Inventor: Tung, Thomas T.
1418 Kirkwall Court
Barrington Illinois 60010(US)

(74) Representative: Harvey, David Gareth et al
Graham Watt & Co. Riverhead
Sevenoaks Kent TN13 2BN(GB)

(54) Extrusion dies and apparatus, methods of extrusion and extruded articles.

(57) Resin stream shut-off control apparatus in a multi-layer extrusion die head enables the continuous formation of a multi-layer plastic resin parison tube suitable for blow-molding and having alternating sections X, comprised of layers formed from all the resins introduced into the die head, which sections are encaptured by one or more blow mold(s) for forming blow-molded articles, especially containers, and sections Y having portions devoid of selected one or more of the layers (which would usually be formed from the relatively more expensive of the resins) which sections Y do not comprise the final article (container) and therefore become flash or scrap.

The resin stream shut-off control apparatus includes an assembly which can intermittently and selectively shut off flow of the selected one or more resin streams thereby preventing them from forming layers in parison sections Y. The apparatus is comprised of movable means (18a), and a die element (31) which define a resin channel orifice (at 31a) between their surfaces (26, 28) and which cooperate at or adjacent the orifice to prevent flow of the selected stream(s) through the orifice. The movable means (18a) and die element (31) can be caused intermittently to abut one another, and preferably there is no die structure just downstream of the downstream-most abutting contact point (31a), i.e. in a merge area (MA) where the selected one or more resin streams merge with the other extruded resin streams. The movable means (18a) can be a sleeve element and this and the die element (31) have juxtaposed corresponding angular surfaces (26, 28) which in the shut-off position abut or fit flush against one another to shut off resin flow through the orifice. The assembly can be used to modulate, rather than or as well as shut-off, flow of the selected one or more resin streams, for example, to form one or more layers therefrom which vary in thickness in parison section X and in the resulting article or container.

Methods are disclosed for forming a container having a scrap layer substantially devoid of the selected one or more layers and constituent resins, and a multi-layer extrusion blow-molded article or container has a layer which includes scrap derived from the aforesaid parison sections Y.

FIG. 1

FIG. 2

## EXTRUSION DIES AND APPARATUS, METHODS OF EXTRUSION AND EXTRUDED ARTICLES

The present invention relates to extrusion dies and apparatus, methods of extrusion and extruded articles.

More particularly, but not exclusively, this invention relates to dies for extrusion blow-molding equipment, especially dies which are usable for producing multi-layered parisons which are blow-molded into containers, methods of forming such containers and the tubular extrudate and to the parisons and containers themselves.

One patent of interest in this regard is US-A-4,522,755 to which reference is hereby directed, which discloses an extrusion blow-molding die for use in producing multi-layer tubular parisons which are then blown into bottles and other containers, methods of forming such containers and the containers themselves. Parisons are formed having multiple layers, including a scrap layer and an oxygen barrier layer. The above patent refers to other patents to which reference is hereby directed.

US-A-3,457,337 discloses containers having a layer (Ms in Fig. 3 and L2 in Fig. 5) which extends partially, but not totally, throughout the containers. These containers do not have a scrap layer. In a container embodying the present invention, by contrast, all layers extend throughout the container, and the container includes a layer containing regrind of the parison scrap or "flash", which scrap or flash contains less than all of the layers of the parison portion used to make the container. US-A-3,457,337 also discloses in Figure 1, "valves" V1 and V2 in schematic form with no teaching of the construction thereof. Apparently, such valves progressively or gradually interrupt the flow of resin L2 between the extruder and the die. By contrast, as explained in detail herein, this invention contemplates specific apparatus and methods for controlling and terminating resin flow within the die head itself.

The control of resin flow at the extruder, as opposed to within the die head, is also disclosed in US-A-4,276,250. See also US-A-3,023,461, and US-Reissue-24,577 which are directed to a different object, namely, the control of thickness of the parison.

One aspect of the present invention is directed to the same general object as the aforesaid US-A-4,522,755 patent, namely, the continuous extrusion of tubular multi-layered parisons. However, in US-A-4,522,755, the parison formed by the dies therein contain the same materials in all layers throughout the parison, i.e., not only in the parison portions that are encaptured within the molds and blown into the container, but also in the portions of the parison between the molds which become the "flash" or scrap. As is well-known, after the overall parison is formed, it is thereafter passed into one or more molds of a blow-molding machine, and the portions of the parison beyond or outside of the mold or between spaced-apart mold sets, which are not encaptured by the mold itself, are scrap. In US-A-4,522,755, however, method and apparatus were disclosed whereby such scrap can be utilized and fed back into the die as a layer, thereby reducing wastage of the scrap.

Another patent of interest is US-A-4,149,839 which discloses a multi-polymer stream extrusion die head for intermittently extruding, by positive displacement, a plurality of polymer materials to form parisons having portions with all of the materials introduced into the extruder die head and portions having less than all of such materials present. The apparatus utilizes the movement of a plurality of reciprocable ring pistons in the die head to regulate the flow of one or more of the polymer materials. More particularly, a ring piston is withdrawn in a direction opposite to the direction of flow to control or interrupt downstream movement of polymer material alongside or past the ring piston, thereby to terminate flow of the material from the die head. Contrary to the invention disclosed herein, US-A-4,149,839 does not disclose that any ring piston surface abuts or contacts a die member surface and another surface or structure formed by and between those contactive surfaces, thereby to shut-off or close-off resin flow through a channel.

US-A-4,149,839 also does not disclose the lack of die wall contact downstream of a resin combining or merge area beyond the contact point between contacting surfaces. The March 1977 issue of Modern Plastics, "Coextrusion-blow Molding for Gas Tanks and Industrial Parts", pg. 70 et seq., written by some of the inventors of US-A-4,149,839, discloses a coextrusion blow-molding accumulator having independent ring-piston rams for regulating component layer thickness from 0 to 100% of total thickness in multi-layer parisons, thereby making it possible to terminate abruptly one or more of the individual layers when desired, and to obtain single resin trim for recycling. As disclosed in the article, the ring piston rams are withdrawn to a point above an infeed port from the extruder while the resin channel is being recharged, and ring piston movement during extrusion is downward to a point just above the feed port orifice. In neither the patent nor the article is there any teaching that the ring piston rams are moved further downward beyond that point to shut-off or close-off flow of resin from the feed port orifice.

It would be highly desirable in a continuous or intermittent extrusion blow-molding process or apparatus to be able, and it is an object of this invention, to selectively eliminate from the scrap portions of a parison, to the extent practically possible, one or more materials or one or more layers, especially those comprised of relatively expensive materials (e.g., a polyvinylidene chloride copolymer such as Saran or a methyl acrylate Saran, a "Saran", an ethylene vinyl alcohol polymer or copolymer containing (EVOH), etc.). Even if the scrap containing thermally unstable materials or relatively expensive layers is recycled back into the die, it is less expensive to produce containers having flash or scrap with substantially less or none of such expensive layers. For example, oxygen barrier materials, such as EVOH, are currently used on a commercial basis by the Applicant, and EVOH, relatively speaking, is a very expensive material. Accordingly, from a commercial standpoint, it would be very desirable in this technology to have the capability somehow of substantially eliminating from the scrap portions of the parison such expensive materials or layers, whether or not such scrap portions are to be recycled.

The apparatus of this invention may be broadly described as a multi-layer extrusion die or die head preferably for blow molding which includes resin shut-off (or flow control) means or apparatus, which preferably, includes, or is in the form of, a resin shut-off or flow control assembly located and operative within the die for producing a solid rod, a tubular extrudate or a continuous parison. The rod, extrudate or parison has alternating sections, herein designated X and Y. Each section X contains all the resin layers and each section Y, consists of, or includes, a portion which contains less than all of said resin layers. Each section X containing all the resin layers is encaptured within a mold to form a container, and each section Y, not encaptured within a mold, consists of, or includes, a portion which contains less than all of said resin layers. The Y sections are the flash or scrap which may be recycled to form a layer of other containers. The die has a plurality of resin channels which preferably are annular for forming a tubular extrudate. The shut-off assembly or flow control assembly is located within the die or die head and controls the resin flow from a channel at selected intervals, preferably almost instantaneously. The flow control assembly includes a "B" resin channel and means for shutting-off, halting, interrupting, preventing, reducing or modulating flow of resin(s) through that channel. Preferably, the means is in the form of a die wall (the term "die wall" includes a member, element or surface) and a movable element cooperative therewith. The resin flow "resin(s) stream B" through the channel (the resin(s) sometimes hereafter being referred to as "resin(s) B") downstream of the shut-off assembly can be eliminated - either virtually totally or at least substantially - so that the structure or layer(s) formed from resin B are likewise eliminated or substantially eliminated from section Y. In the die or die head, there preferably is no structure or die wall in contact with the die wall which cooperates with the combining channel downstream of the point of contact between the die wall and the movable element. In other words, there preferably is no structure in the merge area of the die or die head channel (where the resin(s) B and other resins merge, downstream of the shut-off contact point between the die wall and the movable element) which would interfere with the free flow of the trailing marginal end portion of the shut-off resin(s).

The latter preferred features, of the lack of downstream wall contact and lack of structure in the merge area, are important preferred aspects of the present invention. Actual tests conducted by the Applicant and fluid dynamic theory both indicate that, to the extent that there is such a downsteram die-wall in contact with the first die wall in the resin flow path in the Merge Area ("MA") (defined below) at, or downsteam of the point of control or shut-off by the assembly, or if the first die wall extends in the downstream direction beyond the point of contact with the movable element in the flow path of resin(s) stream B, then the flow of the "B" resin(s) stream is not sharply or cleanly shut-off to the desired extent from the portion of the parison section which is to become the flash or scrap. The preferred configurations are important, because in accordance with this invention, the shut-off or modulated resin(s) are prevented from contacting a structure or a wall downstream of the contact point or Merge Area. If there is such contact there would be dragging against or adherence to a structure or wall, or with stagnant resin or polymer material, the shut-off resin(s) B, contrary to the purpose of this invention, would not adequately or completely be eliminated in the desired, to-be-reused portions of parison sections Y. To the extent that bleeding of resin B into the Y section can be tolerated, it is possible to have some tolerated related or causative minimal downstream structure or wall contact.

This invention further comprises a novel method for forming a solid rod or tubular extrudate or a hollow parison or preform for blow-molding and new parisons, articles and containers.

A primary purpose of the invention is to form a multi-layer tubular extrudate or tubular parison suitable for blow-molding into a novel container which for example would be especially suitable for products sensitive to oxygen permeation loss or degradation. As appropriate, hereinafter, the term "parison" includes an extrudate which can be in the form of a solid rod, a hollow preform or a tubular extrudate and these terms may be used interchangeably. Also, as indicated, it is an important feature of the present invention to provide a method and apparatus whereby, at selected intervals, the flow of certain materials such as expensive ones, is selectively interrupted, shut-off, controlled or minimized to thereby eliminate or substantially reduce them from the parison sections Y which will form the flash during the blow-molding. These materials usually are, but need not be, materials which comprise one or more interior streams and form one or more interior layers of the parison or container. The methods also include forming extrusion blow-molded articles, especially containers, from parison section X having one or more layers formed from recycled or reground scrap comprised of section Y. The scrap substantially does not contain the relatively expensive layer(s).

According to one aspect of the present invention, there is provided an extrusion die apparatus for producing a multi-layer extrudate for an extrusion blow molding machine, which apparatus has a plurality of resin channels and a combining area where resin streams exiting some of the channels are combined, wherein the apparatus comprises a control assembly operative within the apparatus, including:

(a) a resin channel for channelling a resin(s) stream B to be controlled and having an exit orifice where the resin stream B merges with at least one other resin stream;

(b) a die member adjacent to the exit orifice of the resin channel for stream B; and

(c) movable means within the apparatus and cooperative with the die member during extrusion to control, selectively and intermittently, flow of stream B from said channel exit orifice and thereby intermittently interrupt or modulate the flow of said stream B from the orifice relative to one or more other resin streams elsewhere being introduced into the apparatus.

The invention provides a die apparatus for extruding a multi-layer tubular parison to be blow-molded in a blow-molding machine, which die apparatus has a plurality of liquid-state resin stream channel for resins including resin stream B, a resin stream combining channel having a combining area and a die mouth from which an extruded parison issues, wherein the apparatus further comprises a resin stream control/shut-off assembly therein to control resin stream B, which includes:

a) a die member,

b) movable means cooperative with the die member,

c) a resin channel portion formed by the die member and the movable means for channelling flow of resin stream therebetween; wherein said movable means is selectively movable toward, against and away from the die member for selective and intermittent reduction, shut-off or increase of resin stream flow through the channel portion without controlling or shutting-off either (a) the flow of another resin stream through another resin stream channel of the die apparatus, or (b) the flow of any other resin stream through the apparatus.

The invention also comprehends an improved die and die head. Thus, according to the invention, there is a die for continuously producing a multi-layer tubular parison, the die having a plurality of channels for conveying and combining into said multi-layer parison a plurality of resin(s) N, wherein resins N include resin(s) B, the said plurality of channels include a channel for resin(s) B and wherein only resin(s) B are initially conveyed in the channel for resins B, and the die further includes control means within the die for controlling the volume of flow of resin(s) B at a location upstream of the area where resin(s) B is or are combined with any other of said resin(s) N. Also, according to the invention, there is an extrusion die head for forming a tubular multi-layer extrudate from a plurality of resins N where N includes resin(s) B, a resin control mechanism within said die head comprising cooperative surfaces which define a reservoir having an exit orifice for a stream of resin(s) B fed into the reservoir, and movable means operable to move one or both of the said surfaces to increase the volume of said reservoir and thereby during said intermittent periods effectively reduce or prevent the flow of resin(s) B through the said exit orifice and from the die head.

According to another aspect of the die head, the invention provides a die head for extruding a multi-layer extrudate parison from multiple resin streams passing through the die head, which comprises:

a die mouth,

a combining channel in communication with the die mouth, the channel having a combining area where multiple resin streams are combined,

a first channel for channelling flow of a first resin stream to the combining channel to the die mouth,

a second channel having an exit orifice in communication with the combining channel for channelling flow of a second resin stream through its exit orifice into the combining area, said exit orifice having a downstream movable lip to control flow through the exit orifice wherein in said die head there is no additional structure downstream of the lip in the flow path of the resin stream flowing from the exit orifice toward the mouth.

Still further, the invention provides a die head for extruding a multi-layer extrudate from multiple resin streams passing through the die head, which comprises:

a die mouth,

a combining channe communicating with the die mouth and having a combining area where multiple streams are combined,

a first channel for channelling flow of a first stream to the combining channel,

a second channel having an exit orifice for channelling flow of a second stream through its exit orifice into the combining area, the exit orifice being defined in part by an upstream lip and an upstream wall surface which angles in a downstream direction toward the combining channel,

a movable element having an upstream end portion to move toward, against, and away from said upstream surface such that when the upper end portion of the movable element is against said surface, flow through the orifice is thereby cut-off, and such that when the upper end portion of the movable element is moved toward or away from the wall surface, flow through the orifice is reduced or increased,

the said exit orifice being defined in part by an upstream end portion of a movable element, and

the die head being adapted such that there is no channel wall extending in an upstream direction from the lip which, in use, would be in the flow path of and would contact the stream flowing from the second channel.

According to another aspect of the invention, there is provided a resin control assembly within an extrusion die head which combines a plurality of resins N, one or more of which are resin(s) B, comprised of a die element and a movable element each having cooperative surfaces adapted to intermittently abut one another within the die at a point of contact, in use thereby to control or terminate flow of resin(s) B, there being no structure extending downstream of the said point of contact in the flow path of resin(s) B, the said point of contact for example being at or adjacent the mouth of the die head. Also according to this aspect, there is provided a resin shut-off or control apparatus for use in a multi-layer extrusion die head, to render the die head suitable for forming an extrudate having alternating sections including sections which are blow-moldable in one or more molds into multi-layer containers, and flash or scrap sections substantially devoid of selected layers which are present in the sections used to form the containers, the said apparatus comprising flow control means for controlling flow of at least one resin stram such that it is substantially absent from the flash or scrap sections, said flow control means including movable means and means cooperative with the movable means (18a) and forming between them an orifice whose gap is variable by movement of the movable means and with respect to which at least one of the resin streams intermittently is allowed to flow through fully or else is partially or fully prevented from flowing through the orifice, and - optionally but preferably - there is no structure downstream of the orifice in the flow path which would cause drag of the flow of the resin stream(s) which, in operation, exit the said orifice.

The invention further comprehends an extrusion blow-molded multi-layer container formed by blow-molding a parison exiting from an extrusion die by means of a blow-molding apparatus having one or more molds, wherein said parison had (a) alternating sections X which contain all layers formed from all the resins introduced into the die and wherein all or a portion of each section X is encaptured in a mold to form the container, and (b) alternating sections Y which contain portions having less than all of said layers, and wherein sections Y are flash between, beyond or outside of the mold(s), wherein the container so-formed from a section X includes a layer containing regrind of the flash from one or more sections Y, and wherein, <u>optionally</u>, the container has at least one wall layer which <u>varies</u> in thickness. For making such a container, there is provided a method of forming multi-layer extrusion blow-molded containers comprising introducing a plurality of resins N to an extrusion die, interrupting flow of at least one of the resins N, extruding a continuous tubular multi-layer parison having alternating sections X with all of the layers N, and sections Y having portions with less than all of the layers N and formed from less than all of said resins N, and forming the containers only from sections X.

In its method aspects, the invention includes a method of forming a multi-layer extrudate for blow molding, comprising the steps of:

(a) introducing into an extrusion die head a plurality of resins N;

(b) combining the resins to form a multi-layer extrudate with a section X of a desired length and comprised of the said resins N in layers;

(c) then, at selected intervals, within the die head, shutting off the flow of at least one but not all of the resin streams N while the die head is extruding the extrudate, thereby forming the extrudate with a section Y of a desired length comprised of the remaining ones of the plurality of the said resins N;

(d) and then repeating steps (a), (b) and (c), so as to form an extrudate having alternating sections X and Y.

The invention also includes a method for extruding from an extrusion die head a multi-layer extrudate as a parison, and feeding a portion of the parison to a blow mold for forming an extrusion blow-molded container from a selected section X of the parison leaving a parison flash section Y beyond the mold, the method comprising:

(a) introducing into the die head a plurality of resins N, which include one or more separately introduced resin(s) B,

(b) combining the resins N to form a multi-layer parison section X of a desired length comprised of layers formed from resins N;

(c) then, at selected intervals, within the die head, controlling the flow of resin(s) B to prevent resin(s) B from combining with the other resin(s) N, thereby forming a multi-layer parison section Y of a selected length comprised of layers formed from resins N minus resin(s) B;

(d) feeding a parison to a blow mold for forming an extrusion blow molded container;

(e) and repeating said steps (a), (b), (c), (d) and (e), so as to form a multi-layer parison having alternating sections X and Y, and multi-layer containers from the said section X.

The various aspects of the present invention will now be explained in more detail, by way of example only, in the following non-limitative description which refers to the accompanying drawings, in which:

Figure 1 is a vertical cross-section with portions broken away of a preferred embodiment of a shut-off assembly or mechanism employed in a die apparatus according to this invention, shown in the open position,

Figure 1A is a vertical cross-section with portions broken away of a second embodiment of the shut-off mechanism of this invention,

Figure 1B is a vertical cross-section with portions broken away of a third embodiment of the shut-off mechanism of this invention shown operative at the orifice of the die-head,

Figure 1C is a vertical cross-section with portions broken away of a fourth embodiment of the shut-off mechanism of this invention shown operative at the orifice of the die-head,

Figure 1D is a vertical cross-section with portions broken away of a fifth embodiment of the shut-off mechanism of this invention shown operative at the orifice of the die-head,

Figure 2 is a vertical cross-section with portions broken away of the shut-off mechanism of Figure 1, shown in the closed position,

Figure 3 is a view in vertical cross-section of an embodiment of a preferred die-head apparatus of the invention including the shut-off assembly,

Figure 3A is an enlarged vertical cross-section of the upper end of the die-head apparatus shown in Figure 3,

Figure 4 is an elevational view with portions broken away of a parison formed by the apparatus and method embodying the present invention,

Figure 5 is a cross-sectional view of the parison shown in Figure 4, along the lines 5-5 of Figure 4,

Figure 6 is a cross-sectional view with portions broken away taken along the lines 6-6 of Figure 5,

Figure 6A is a cross sectional view of a two layer parison according to the present invention,

Figure 7 is a cross-sectional view with portions broken away taken along the lines 7-7 of Figure 5,

Figure 8 is a perspective view of a six-layer container formed using the method, apparatus and parison according to this invention,

Figure 9 is a cross-sectional view along the lines 9-9 of Figure 8,

Figure 10 is a perspective view of a two-layer container formed by a method, apparatus and parison according to this invention,

Figure 11 is a cross-sectional view along the lines 11-11 of Figure 10,

Figure 12 is a perspective view of a three-layer container formed by a method and apparatus according to the present invention,

Figure 13 is a cross-sectional view taken along the lines 13-13 of Figure 12,

Figure 14 is a perspective view of a four-layer container formed by a method, apparatus and parison according to this invention,

Figure 15 is a cross-sectional view along the lines 15-15 of Figure 14,

Figure 16 is a perspective view of a five-layer container formed by a method, apparatus and parison according to this invention,

Figure 17 is a cross-sectional view along the lines 17-17 of Figure 16,

Figure 18 is a perspective view of another multi-layer container formed by a method, apparatus and parison according to this invention,

Figure 19 is a vertical cross-section, with portions broken away, of a resin flow interruption mechanism or shut-off assembly embodying this invention, and

Figure 20 is a vertical cross-sectional view with portions broken away taken along the lines 20-20 of Figure 18.

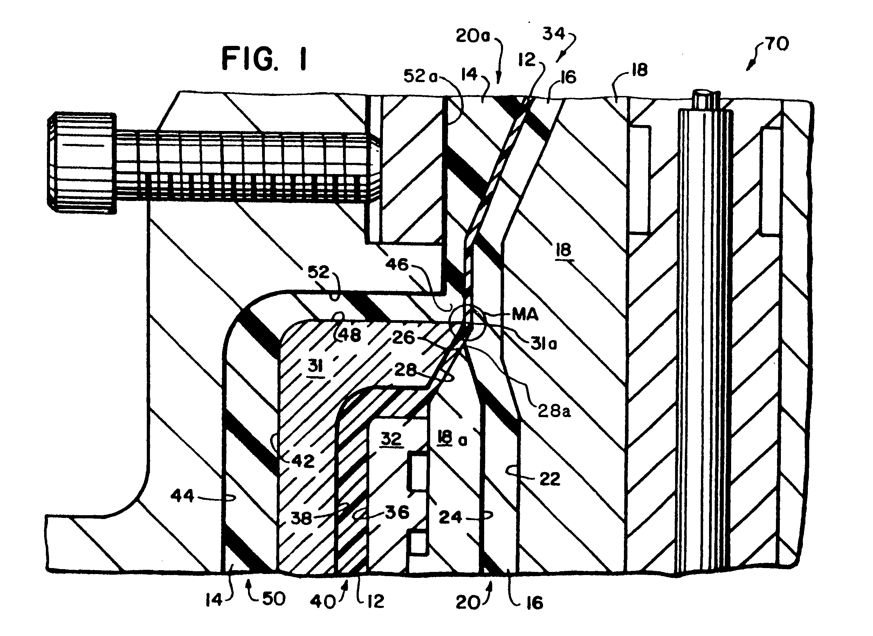

Figure 1 shows a portion of a preferred embodiment of the shut-off assembly or mechanism of this invention, generally designated 70, shown in a left-hand portion of a die head or apparatus.

More particularly, in Figure 1 there is a resin stream generally designated 34 which is a combination, in layered form, of resin streams 14, 12 and 16 which previously were conveyed through independent channels. Sleeve support 18 is movable and preferably is connected to movable means, here shown as a sleeve element 18a, by means not shown. The confronting walls, i.e. wall 22 of element 18 and the wall 24 of element 18a, form a channel 20 which conveys a resin stream 16.

Sleeve element 18a also has a tapered wall 26 which is designed to fit flush or abut with the tapered surface or wall 28 of a first die member 31. In Figure 1, the sleeve element 18a is shown retracted to allow resin stream 12 (which, for example, may be or include one or more expensive resins such as EVOH or other resins) to flow into combining channel 20a to form layered stream 34, here comprised of layers 14, 12 and 16. (Resin stream 12, which itself can include more than one resin stream, is sometimes, referred to herein as resin(s) stream B or merely stream B).

In Figure 1, resin stream 14 initially flows through a channel 50 defined by the wall 44, and wall 42 of first die member 31. Resin stream 14 enters the combining channel 20a at or through a location generally designated 46. At location 46, the channel 50 is defined by a wall or surface 48 of first die member 31 and, spaced apart therefrom in the down stream direction, a die wall surface 52.

In Figure 1, resin stream 12 flows through channel 40 defined primarily by wall 38 of die member 31 and by wall 36 of die member 32, through the exit orifice of the continuation of channel 40 further defined by tapered wall 26 of sleeve element 18a and tapered wall 28 of die member 31, and then into combining channel 20a as an interior layer of resin stream 34. Its entrance in combining channel 20a occurs when sleeve element 18a is retracted as shown in Figure 1.

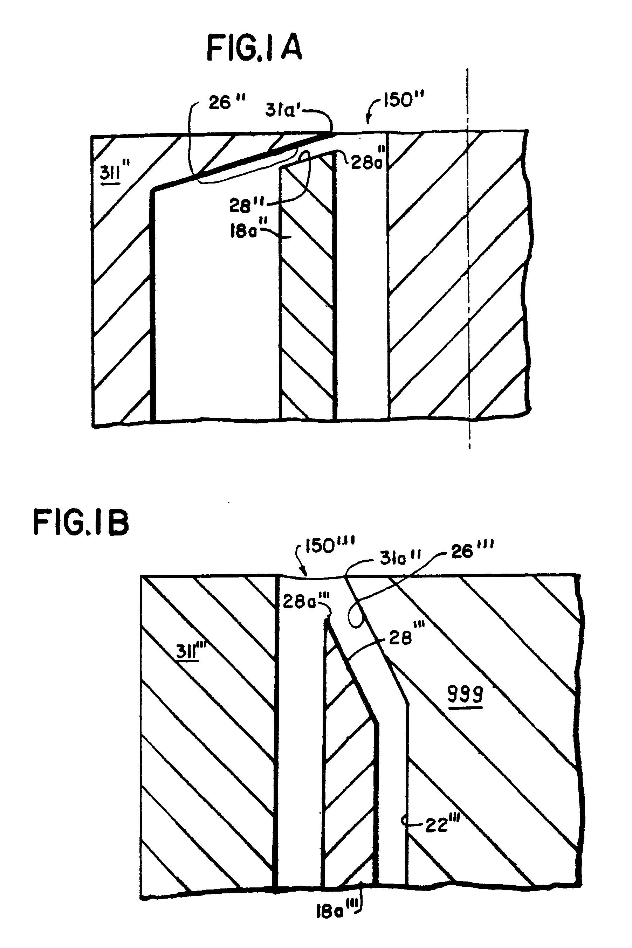

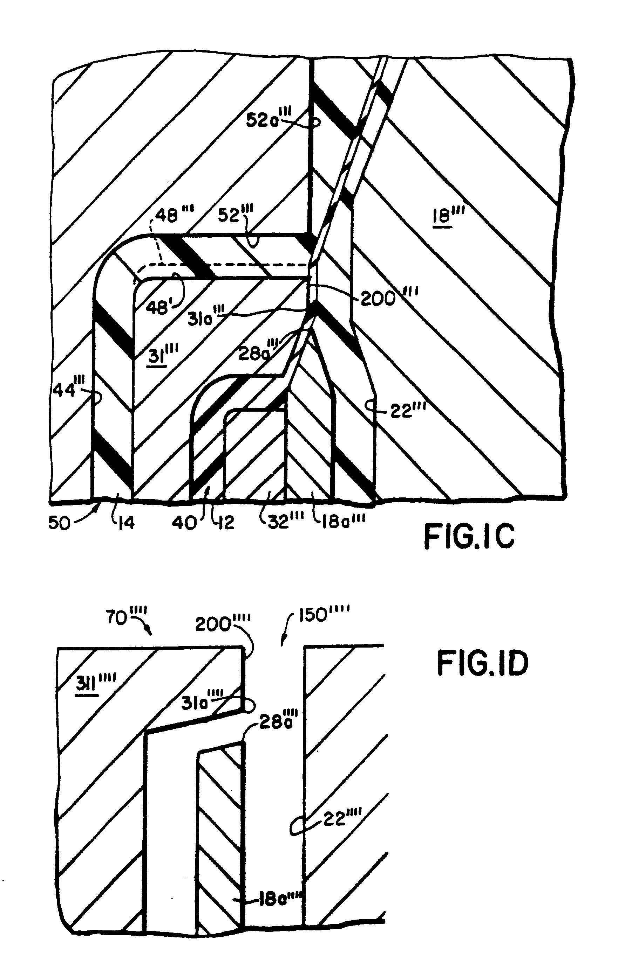

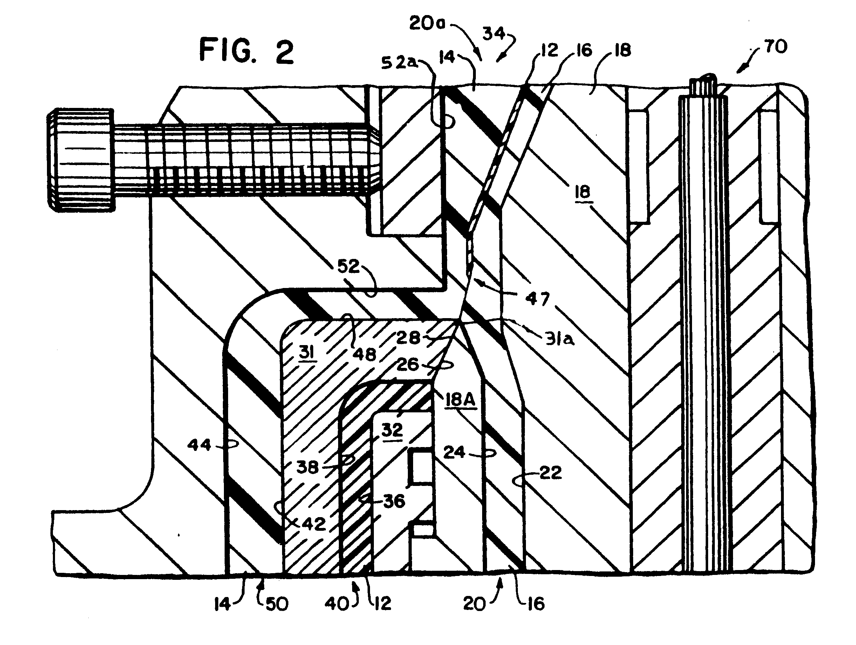

Figure 2 is like Figure 1 except that in Figure 2 the sleeve element 18a has been moved axially toward the exit of the die head so that its outer tapered wall 26 is in flush contact with the inner tapered wall 28 of element 31 thereby completely shutting off the flow of resin stream 12 into combining channel 34. The movement of sleeve element 18a is accomplished by suitable means, for example electro-mechanical or hydraulic means (not shown). The control means employed are a matter of choice provided they are operative to advance and retract sleeve element 18a of the shut-off assembly or system, as desired to produce parisons and containers of the type herein contemplated. The shut-off assembly of this invention includes the movable sleeve member 18a, the surface or wall, e.g. of the member 31, with which it cooperates, including contact point 31a, to terminate or control flow and the die head apparatus is adapted by design to avoid or minimize undesired or undue contact between the trailing end portion of the shut-off resin stream and significant stagnant structure or material downstream of point 31a or the operative shut-off surfaces.

With respect to Figure 2, it is important to note that there is no downstream die wall in direct contact with or extending in a downstream direction from surface 48 of first die member 31 at any location near or at the downstream-most (uppermost in Figure 2) shut-off point of contact 31a between sleeve element 18a and wall 28 of member 31. It has been discovered that this preferred design makes it possible to eliminate selectively, and virtually completely, the flow of resin stream 12 (resin(s) stream B, also sometimes referred to as resin(s) B) to the extent desired, from the parison sections Y which form scrap or "flash" between the molds, thereby achieving substantial savings in cost, see Figure 5, where alternating sections are labelled X and Y. Of course, in commercial manufacturing techniques, in order to ensure that the container does actually have all of the layers which are present in parison section X, the shut-off of resin stream 12 may be timed so that all of the layers including stream B extend for a short distance into parison section Y on either side of parison section X. For example, parison section Y may include all layers extending for example 10% of its length at either or both of its ends, so that in the latter case, the remaining 80% (central) portion of parison section Y contains less than all layers than parison portion X. As shown in Figure 2, the shut-off mechanism has sharply terminated resin stream 12 at point 47, which termination occurred virtually immediately when channel 40 was closed by the shut-off assembly. It is to be noted that resin 12 e.g. expensive EVOH resin, does not contact any die wall or surface downstream of shut-off point of contact 31a. Wall 52a is removed or offset (here, radially outwardly) from the flow path of resin 12 and there are no stagnant polymers in contact with the resin, such that there is no drag on the tail end of the resin stream B, and its sharply terminated marginal end portion and/or tail end remains as it proceeds toward the die mouth.

Again, if a clean shut-off of stream B is desired, that is, with little or no trailing resin material from resin stream 12 after shut-off, then there should be no contact, or as little contact as possible, of stream B with any downstream structure or stagnate polymer which would create a drag sufficient to cause the resin tail end of stream B to appear blurred in parison section Y. A preferred apparatus for accomplishing this shown in Figures 1 and 2 has no die wall in contact with die wall surface 48 or downstream from the downstream-most point of shut-off designated 31a, wherever that may be. Clean shut-offs and minimal or no downstream wall contact can also be obtained where the stream to be cut off has contact with a moving fluid such as resin stream 14 (as shown in Figures 1 and 2), or with air, as in the case where point 31a is at the mouth of the die head, as shown in Figures 1A and 1B.

Figure 1A shows that the upstream lip or upstream-most shut-off point of contact 31a' between sleeve support 18a" and die element 311" can be at the lip of die head mouth 150". Similarly, Figure 1B illustrates another configuration wherein the shut-off mechanism comprising sleeve support 18a" can move into flush contact with die element 999 at 31a" at the lip of the mouth 150" of the die. These embodiments are adapted to cleanly shut off the outside layer of a two-layer (or, if desired, more than two-layer) stream. Figures 1A, 1B and 1D are preferred embodients for producing parison sections X having 2 layers, and, of these three embodiments, Figures 1A and 1B are preferred. These latter embodiments are particularly suitable when the outside layer is a resin stream such as 12 or resin B.

As shown in Figs. 1C and 1D, if it is tolerable for an amount of resin stream 12, or resin B, to appear in Section Y, e.g. 15% of the length of the Section Y, then some wall contact with resin stream 12 can be allowed to occur downstream of the downstream-most shutt-off point, for example, along wall 200" (Fig. 1C) or wall 200"" (Fig. 1D), so long as the extent of structural contact or the length of the wall which will be in contact with resin stream 12, is correlated with and will not produce an amount or length of resin B in section Y which is greater than desired. For example, sleeve supports 18a" and 18a"" in Figs. 1C and 1D respectively, can move to terminate flow sharply at point 31a" or 31a"", but die walls 200" and 200"" extend a length which would produce some contact of shut-off resin stream 12 with such die walls and some resin material of resin stream 12 in section Y. The length and design of die walls 200" and 200"" can be extended or adapted as desired to produce a flow rate and volume of resin stream 12 correlated to the relative flow rates and volumes of the resin streams involved. For example, whereas the length of wall 200" might for example produce a drag of resin stream 12 which is sufficient to cause 15% of the length of section Y to include some resin B, the dashed line 48" in Fig. 1C indicates a wall surface such that the length of wall 200" downstream of she shut-off point might create, for example, 20% or any appropriate or desired percentage of the length of Section Y to include shut-off resin material from resin stream 12. As shown in Fig. 1D, the downstream wall 200"" which could be in contact with resin stream 12 after it is shut off, can be at or adjacent to the mouth 150"" of a die head 70"".

Although the shut-off assembly of this invention preferably is used to shut-off the flow of a resin(s) stream, it can also be used to control or modulate the flow rate of resin(s) stream, e.g. resin stream 12 into combining channel 20a in Fig. 1 as parison sections X are being formed. This is accomplished by controlling sleeve element 18a in Fig. 1 by the aforesaid suitable means such that it acts as a throttle or choke to vary the gap or opening between sleeve element wall 26 and first die element wall 28. Optionally, such flow rate control could be accomplished where the stream(s) to be controlled merge(s) with one or more other flowing stream(s), for example at a merger area such as MA in Fig. 1.

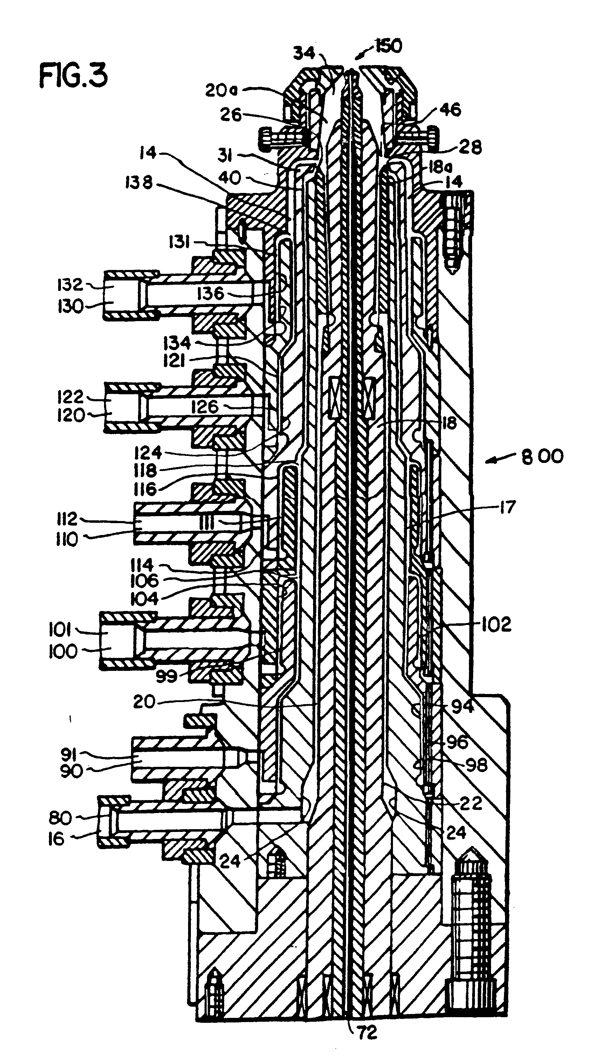

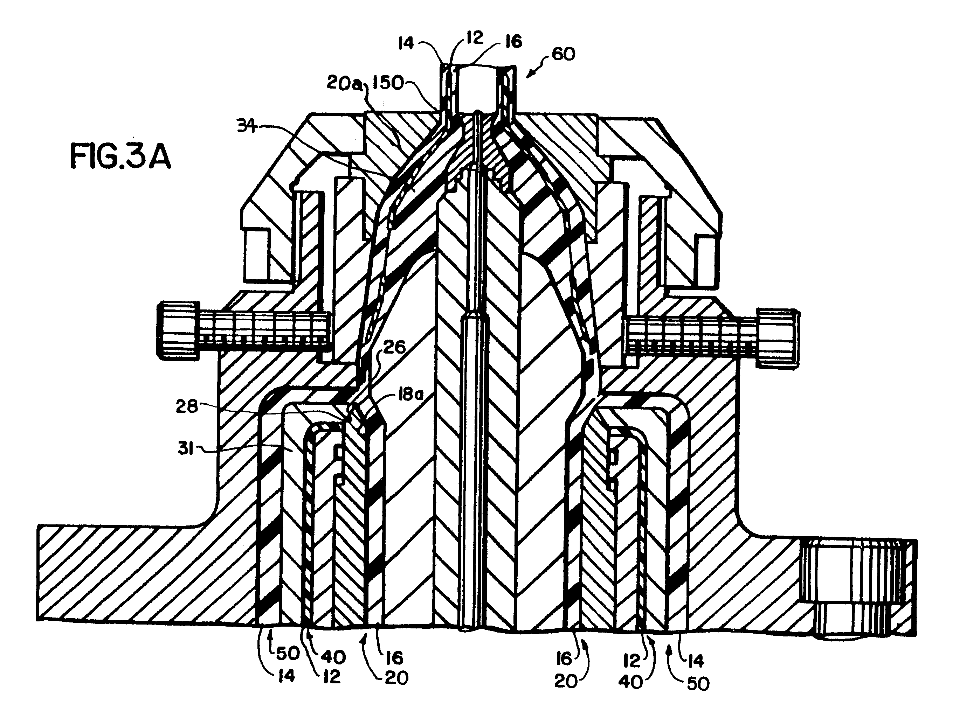

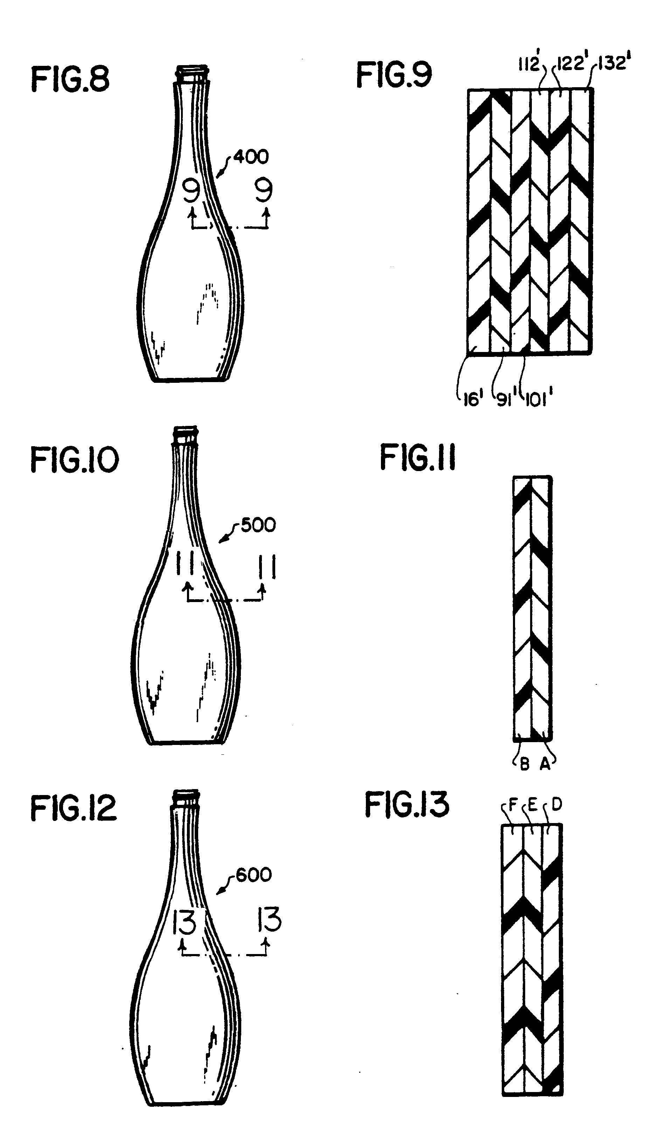

A preferred embodiment of the apparatus of this invention is shown in Figure 3, which is a longitudinal cross section of an extrusion die head, generally designated 800, suitable for the continuous production of the multi-layered tubular parisons of this invention, which in turn are suitable for blow molding purposes. Die head 800 includes the shut-off die concept and assembly illustrated in Figures 1 and 2 and is thereby adapted to produce a parison, having Sections X and Y, as shown in Fig. 5, the former of which can be blow-molded into articles or containers having a six-layer wall of desired composition, such as shown in Figures 8 and 9. In the following description, the resins referred to for forming the parisons are for forming an oxygen-barrier container which has a scrap layer and which is particularly suitable for use as a food container.

In Figure 3, die head 800 of an extrusion die apparatus has a number of stationary and moveable elements and includes ports and channels for the introduction of a number of different resins which form the different layers of the parison. In the center of the die, there is provided means, here, an axially moveable rod 72 for controlling wall thickness of the parison. Adjacent to rod 72 are means for shutting-off the flow of a resin(s) stream, here shown as including a moveable sleeve support 18 whose purpose and function will be explained subsequently.

Adjacent the bottom of Figure 3, there is shown a first port 80 which serves to introduce a first resin 16 into the die head. The resin 16 in this embodiment may be a polyolefin such as polypropylene (PP) or polyethylene (PE) which serves to form a structural layer for the container formed by blow-molding the parison. However, in other embodiments, resin 16 may be any of a wide variety of thermoplastic materials such as polyethylene terephthalate (PET), polyvinylidene chloride (PVC), polycarbonates or copolyesters, such as sold under the trade designation Kodar™ PETG. Pesin 16 flows through a channel 20, the outside wall of which is defined as 24 and the inside wall 22 of which is defined by the outer wall of sleeve support 18a. Above port 80, there is a second port 90 through which a second resin 91 is introduced. Resin 91 flows through a channel 98 defined by walls 94 and 96 of the die. In this embodiment, resin 91 is an adhesive, such as a chemically modified polyolefin. Downstream of the aforesaid ports is a third port 100 through which a third resin 101 is introduced into the die head, which resin flows initially through channel 99 defined by walls 102 and 104. In this embodiment, resin 101 preferably is a gas barrier comprised of a material such as an EVOH, nylon(s), or Saran. At the junction of channels 98 and 99, shown as 106, the resin streams 101 (barrier) and 91 (adhesive for forming the inside adhesive layer of the parison) are brought into contact with each other so that the barrier resin 101 is on the outside of inside adhesive resin 91 to form a combined layered resin stream 17.

Through a fourth port 110 downstream of the first three ports, a fourth resin 112, which in this embodiment is preferably the same adhesive as 91, is introduced. Resin 112 flows into the die head through a channel 111 defined by walls 114 and 116. At the location 118, the outer adhesive or fourth resin 112 merges with resins 101 and 91 to form layered resin stream 12, whose layers in this embodiment comprise adhesive resin 112 as the outside layer, barrier resin 101 as the middle layer and adhesive resin 91 as the inside layer which flows to location 40.

Through a fifth port 120, a fifth resin 122 is introduced which resin flows into the die head via a channel 121 defined by die walls 124 and 126. Resin 122 in this embodiment is or includes scrap, i.e., it is or includes a regrind of the flash from previous parison sections Y which were not molded into a container. Resin 112 may also include a regrind of defective containers, and/or virgin resin materials(s).

Through a sixth port 130, a sixth resin 132 is introduced, which resin flows into the die head through a channel 131 defined by die walls 134 and 136. In this embodiment, resin 132 forms an outside layer of the container and preferably is a structural material such as a polyolefin (e.g. polypropylene or polyethylene or blends thereof), or may be any of a wide variety of other thermoplastic materials such as PET, PVC, PETG, polycarbonate, etc. At location 138, sixth resin 132 merges with resin 122 so that resin 132 forms the outside layer of, and scrap-containing resin 122 forms the inside layer of, combined resin stream 14.

It will be observed that in the die head shown in Figure 3, moveable sleeve element 18a of the shut-off assembly of this invention is shown in the open position. As previously explained, sleeve element 18a can be moved axially toward die mouth or orifice 150 into contact with wall 28 of first die element 31 to close channel 40 which contains the resin stream of layers 112, 101 and 91, outer layer to inner layer, respectively.

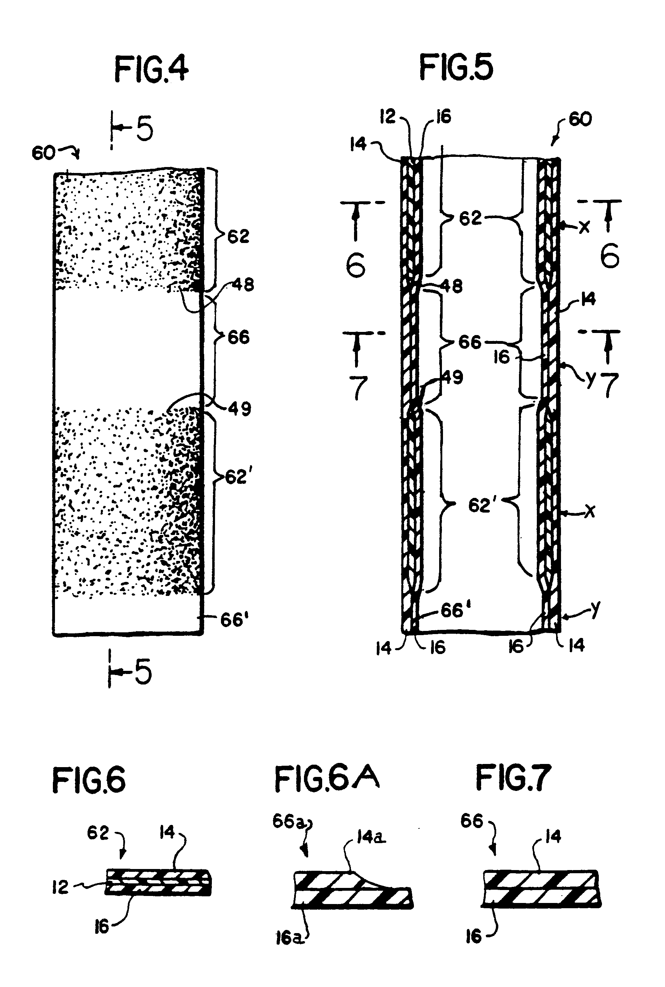

In or at a merge area, generally designated MA (see Figure 1), resin stream 12 enters combining channel 20a and resin streams 14, 16 and 12 are normally combined to form a multi-layer stream 34 (see Figure 3) which exits from the die head at 150 and forms a continuous parison 60 (a portion of which is shown in Figures 4-7) which is thereafter fed to any suitable molding apparatus, such as shuttle molds or spaced-apart molds on a rotary wheel (not shown) which are the preferred embodiments for forming containers. These containers, as indicated by Figures 4-7, encapture sections 62 or portions thereof designed 62′ (also labeled "sections X" in Figure 5) of parison 60 which contain all layers of the parison, from which preferred containers of this invention are formed by blow molding. These containers may be made from the entire section X or from only a portion thereof. The remainder of the parison 60, labeled as "sections Y" in Figure 5, i.e., the parison sections 66 (which include little or no barrier layer), or sections 66′ (portions of which include some barrier layer are scrap or flash.

In Figure 3A, flow of resin streams 12 from channel 40 into combining channel 20a has been shut-off by the shut-off mechanism of this invention, shown and described in connection with Figures 1, 2 and 3. Figure 3A shows that sleeve element 18a has been moved so that its tapered wall 26 is in operative contact with the tapered wall 28 of element 31, thereby closing channel 40 and shutting off flow of resin stream 12. As shown in Figure 3A, this is done at selected times so as to control and terminate flow of, and thereby minimize or prevent the presence of resin(s) B or of a layer formed from resin stream 12 in sections 66 or 66′. This minimizes or eliminates resin B consisting or comprised of, for example, a relatively expensive barrier material such as EVOH, in portion 66 or 66′ of the parison 60 which will eventually become the flash (or scrap) on either side of the blow-molded container. An examination of the composition of combined resin stream 34 in combining channel 20a of Fig. 3A, shows that sleeve element 18a was opened to start flow of resin stream 12 (see leading edge of that stream in the parison portion exterior of die head mouth 150), then closed for a short period to terminate its flow, then reopened, and then, as shown, re-closed.

When sleeve element 18a of Figure 3A is retracted vertically downward, as shown in Figure 1, the resin stream 12 joins resin streams 16 and 14 as an interior layer thereof to form, in merge area MA, combined layered resin stream 34.

In Figure 4, the stipling represents resin(s) B material from resin stream 12. Figure 4 shows a multilayer parison 60 which can be produced by the method and apparatus of this invention, having sections 62 or 62′ which contain all of the resins or the layers formed from all of the resin streams, and which are to be encaptured within the molds. The sections of parison 60 which preferably do not contain resin of resin streams 12 (or, if desired, contain minor portions thereof) are indicated as 66, 66', respectively. These will become the scrap or flash, i.e., the part of the parison which will not be formed into a container as they will be outside of, beyond, or between the mold or molds.

Figure 5, a cross section taken through parison 60 along line 5-5 of Figure 4, illustrates the wall construction of parison 60 wherein all of resin layers 14, 12 and 16 are present in sections 62 of 62'. Sections 62, 62' are used to form the blow molded container. Sections 66 contain only layers 14 and 16. Sections 66' may have a portion or portions of their lengths which include resins (B) or resin stream 12. Sections 66 and/or 66' will become the flash or scrap which (if desired) will be reground and fed back into port 120 as part of resin 122, as indicated by Fig. 3.

Figure 6, a cross section taken through line 6-6 of Figure 5, shows the wall of section 62 or 62' of the parison in more detail and shows the layer formed from resin stream 12.

Figure 6A shows an alternate embodiment whereby the wall portion 66a shown contains only the materials of layers formed from resin streams 14a and 16a. The portion containing only 16a will become scrap or flash which (if desired) will be reground and fed back as part of resin 122 in accordance with the present invention.

Figure 7, a cross section of parison 60 taken along the line 7-7 of Figure 5 shows the result of the shut off or control assembly of this invention having shut off the expensive material(s) of resin stream 12 whereby the wall portion shown taken from section 66 or 66' of the parison does not contain the selectively excluded (expensive) material(s) (resin(s) B) of resin stream 12, which are present in Figure 6. Thus, in Figure 7, the wall of the parison section 66 or 66' contains only the materials of layers formed from resin streams 14 and 16.

Figure 8 shows an extrusion blow-molded six layer container 400 made from all or a portion of parison section 62 or 62' by method and apparatus of this invention.

As shown in Figure 9, a cross-section of the wall of the container of Figure 8, the wall of container 400 has an outer structural layer 132', a scrap-containing layer 122', an outer adhesive layer 112', a gas barrier layer 101', an inner adhesive layer 91' and an interior structural layer 16', each respectively formed from resins 132, 122, 112, 101, 91 and 16. What is particularly unique about the above construction is that the scrap-containing layer 122' comprises a regrind of parison sections 66 or 66' (sections Y), at least a portion, preferably at least a major portion of which which contains less than all of the layers of the parison utilized to form container 400. In this case, preferably barrier layer 101', being expensive material, has been virtually eliminated from that section of the parison between the molds. (Of course, it may be desirable, in some instances, also to add discarded container regrind to the parison flash or scrap regrind and/or to add other resin(s) to comprise the resin(s) for forming scrap-containing layer 122'. The same can be true for all other embodiments of the invention described herein.)

Although the die-head shown in Figure 3 which incorporates the shut-off assembly of this invention is designed to produce a six layer parison 60 with shut-off sections 66 or 66' (which can be the same as sections Y as defined herein) alternating with sections 62 or 62' (sections X), to form such a container 400, the shut-off mechanisms, e.g. those illustrated in Figures 1-3A can be used in connection with other die-head designs and may be used to produce parisons with shut-off portions of any number of layers, i.e., more than 6 layers, or less than 6 layers. In addition, the resins used may be selected from a wide variety of thermoplastic materials.

Figure 10, for example, shows a two layer container 500, the walls of which comprise layers A and B (Fig. 11), in which the scrap-containing layer A is the continuous layer in the formation of the parison. If the apparatus of Figure 1 is used to produce such a parison, the scrap resin of which layer A is comprised should be introduced into channel 20 or 50 of Figure 1 and the other resin(s) of which layer B is comprised is or are introduced into channel 40 and selectively shut-off as desired by the shut-off assembly. As previously indicated, the shut-off assemblies shown in Figures 1B-1D are particularly well-suited to produce such a two-layer container 500.

As indicated, parisons with any number of layers may be produced with the use of the shut-off assemblies illustrated herein, or by modifications thereof which are clearly within the scope of the present invention.

As a further example, Figure 12 illustrates a container 600 which, as shown in Figure 13, has three layers D, E and F. Tn this case, if, for example, the apparatus of Figure 1 is used, the resins used to form layers D, E and F are introduced through channels 20, 40 and 50. One layer is a scrap-containing layer and the other two layers may contain different materials as compared with one another. If they contain the same materials, the scrap layer can but need not also include regrind from other sources containing different materials.

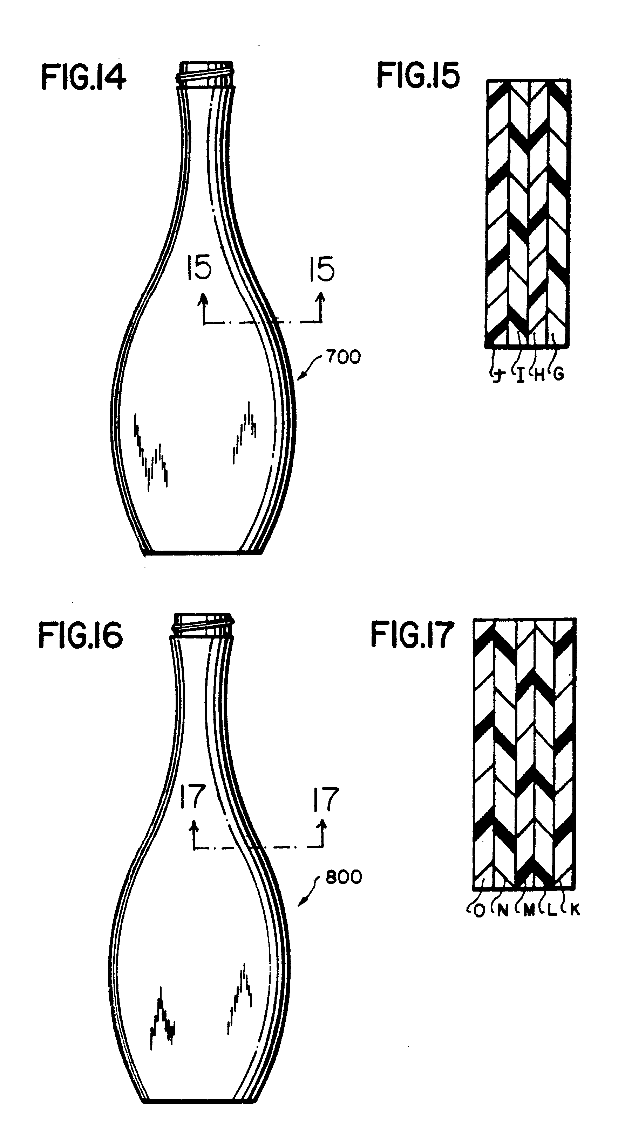

Figure 14 illustrates a container 700 which, as shown in Figure 15 has four layers G, H, I and J, one of which is a scrap-containing layer of the type produced by the apparatus and method of this invention.

Figure 16 illustrates another container 800 which, as shown in Figure 17, has five layers K, L, M, N and O, one of which is a scrap containing layer of the type produced by the present apparatus and method of this invention.

Of course, in Figures 14 - 17, adjacent layers are of different materials -- otherwise if adjacent "layers" contain the same materials, they would not be considered separate layers.

As illustrated in Figs. 8-17, another key feature of this invention, in addition to the apparatus and method described herein, is a multi-layer container, preferably made by the apparatus and method of this invention, having at least one layer of or containing scrap which scrap includes, but is not limited to, regrind from parison sections Y which have a portion which contains less than all of the layers used in that parison's sections X which form the container. In the description of containers illustrated herein, the references to "scrap" or "regrind" contemplate a regrind of a parison section Y having a portion -- preferably the entirety or a major portion -- which contains less than all of the layers that are in the parison sections used to form the container. Herein, the layers used to form parison sections X are sometimes referred to as "N" and the resin stream(s) to be eliminated or reduced in sections Y are sometimes referred to as "B".

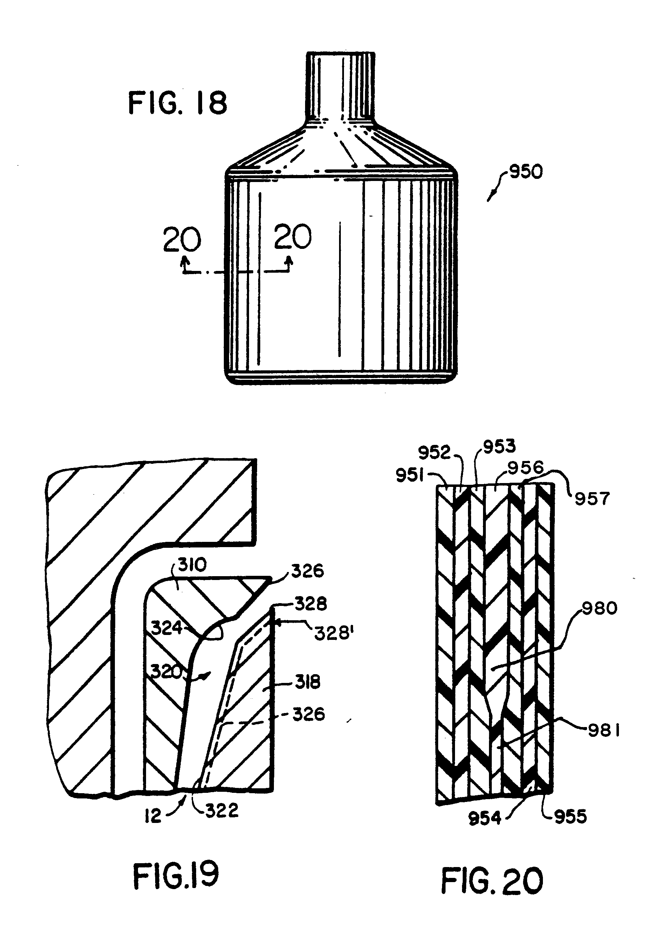

Figure 18 illustrates another container 950 of the present invention, a cross-section of whose wall is shown in Figure 20. In Figure 20, it will be observed that the wall structure of the cross-sectioned area of layer 956 varies from being relatively thick as at 980 to being relatively thin, as at 981, and the thickness of adjacent layers 953 and 957 vary conversely. From a commercial standpoint, this is a very important new development because there are certain extrusion blow molded containers with respect to which it is desirable (for cost reasons, for example) to vary the thickness of one or more layers in various areas of the container. In Figure 20, layers 951 and 955 may be comprised of structural materials of the type desired, layers 952 and 954 may be comprised of adhesive materials, layer 953 may be or contain scrap, and layer 956 may be comprised of a gas-barrier material. Layer 957 is optional and may be comprised of any suitable material.

Figure 19 illustrates another embodiment of method and apparatus of this invention for interrupting, stopping or modulating flow of one or more streams within a multi-stream extrusion die. In accordance with this invention, interruption or termination need not be done by means of physical structure. Figure 19 further shows that interruption or termination of flow can be effected without bringing an element such as sleeve element 18a into actual contact with a die wall surface such as die wall 26 of Figure 1 or 2. In Figure 19, surface 328 of sleeve element 318 need not contact die wall surface 326 of die member 310. Interruption or shut-off of flow of resin stream 12 in this case can be accomplished by providing a reservoir or area, for example 320, for the accumulation of a desired volume of resin material, here, for example, by providing tapered wall 322 and arcuate wall 324. Movements of sleeve element 318 relative to die member 310, e.g. by retracting the element from the position shown, to the position of dashed line $328'$, enlarge the volume of the reservoir or area 320 by the amount between the solid line 322 and the dashed line $328'$. The additional volume thereby created for reservoir 320, provides an accumulation area for additional resin 12 (Resin B) so that the flow of resin stream 12 exiting from between elements 326 and 328 may thereby accordingly be interrupted completely, or reduced in rate and/or volume partially, in a controlled manner. The apparatus shown in Fig. 19 can be used to form a container such as shown in Figs. 18 and 20 having a wall in which resin B has been reduced in thickness.

A main advantage of this invention, is to provide methods and die head apparatus for selectively reducing, interrupting or completely shutting off the flow of one or more resin streams from a multi-resin stream, so that the material of the interrupted or shut off stream can be reduced or substantially eliminated from the portions of the parison (section Y) which become the flash. Another advantage is to provide methods and apparatus in a die head for controlling the amount or extent that such interrupted or shut-off-materials appear in the flash, to desired or tolerable amounts depending on, among other factors, the cost or availability of the material, the precision of the equipment, the length of the flash, and the ability to utilize the flash as scrap.

These advantages are obtained by providing methods and apparatus for preventing, limiting or controlling the extent and/or duration of contact and/or drag between the stream(s) to be interrupted or shut-off and structure or stagnant polymer, downstream of the downstream-most point of interruption or shut-off, e.g. 31a in Figure 1, $31a'$ on Fig. 1A, , $31a''$ in Fig. 1B, $31a'''$ in 1C and $31''''$ in Figure 1D for clean interruption shut-off. Where no interrupted or shut-off material can appear in the flash, it is preferred that no contact or drag occur, and the shut-off assembly embodiments shown in Figures 1, 1A, 1B, 2, 3 or 3A are suitable for this purpose.

Alternatively, where some amount of interrupted or shut-off material can be tolerated in the flash, die element 31″″ may have a predetermined relatively short-downstream wall 200″ beyond point 31a″ as shown in Figure 1C (see Fig. 1D also) or, where the shut-off assembly is operative adjacent die mouth 150″″, as in Figure 1D, the element 311″″ may extend by a similar distance 200″″ beyond point 31a″″.

The reason why downstream contact usually is to be prevented when no interrupted or shut-off material is intended to appear in the flash, or when controlled or tolerable desired amounts can appear in the flash, is that stagnant polymer or wall contact with the resin stream(s) interrupted or shut-off, downsteam of the downstream-most interruption or shut-off point between the shutting-off member, here sleeve element 18a and the opposing member, first die element 31, creates drag of the contacting or adjacent resin material of the resin stream on the downstream stagnant material or downstream surface of the structure or wall (e.g., surfaces 200″ and 200″″ in Figures 1C and 1D). The flow rate of the dragged resin material will, therefore, be less that that of the resin materials flowing without such drag, e.g. in Figures 1C and 1D, those more centrally in the channel in question. In such case, instead of a clean, sharp interruption, cut-off or termination (e.g. see terminal edges 48 and 49 in Figures 4 and 5), due to the contact and consequent drag, the termination of resin(s) Section X would not be clean but would be smeared out and, in extreme cases, would overlap the leading edge of resin stream(s) of the following parison section Y.

The prevention of contact between the interrupted or shut-off stream 12 and the downstream structure or stagnant polymer can be accomplished by any method or means in accordance with this present invention. Thus, it can be accomplished for example by flow of an interstitial stream, e.g., resin stream 14 in Figures 1 and 2, or by die design, e.g. no downstream die wall contact with the first die element as provided in the embodiments shown in Figures 1, 2 and 1A and 1B. In the preferred embodiment, wall 52a is radially offset away from the axis of the die head to prevent contact between the resin stream 12 with wall 52 downstream of shut-off point 31a, as indicated in Figure 1.

The shut-off or control assembly of this invention can be employed other than to fully interrupt or shut off flow. As illustrated in Figure 20, it may be employed in the formation of parison sections or portions such that the gap between the shut-off element here, e.g., sleeve element 18a in Figure 1 and the opposing cooperative member, here, e.g. die element 32 in Figure 1 is controlled, so that the flow of resin(s) B from a channel, e.g. 40 in Figure 1, is modulated or throttled as the merging area MA. Accordingly, the amount of material and thickness of the stream(s) B and resulting layer of the article to be formed may be varied as desired within the wall of section X and the container. This feature can also be used advantageously to control and limit the amount of expensive material used in forming Section X, as shown in Figure 20.

Apparatus and method of this invention and the description above can be applied to interrupt, terminate and/or control flow of more than just resin stream from one channel. This, extrusion apparatus according to the invention can comprise one or more assemblies operative, or operable, to affect flow from more than one channel.

## Claims

1. An extrusion die apparatus for producing a multi-layer extrudate for an extrusion blow molding machine, which apparatus has a plurality of resin channels (e.g. 20, 40, 50) and a combining area (20a) where resin streams exiting some of the channels (20, 40, 50) are combined, wherein the apparatus comprises a control assembly operative within the apparatus, including:

(a) a resin channel (40) for channelling a resin(s) stream B (12) to be controlled and having an exit orifice where the resin stream B merges, with at least one other resin stream (14 or 16);

(b) a die member (31) adjacent to the exit orifice of the resin channel for stream B; and

(c) movable means (18a) within the apparatus and cooperative with the die member (31) during extrusion to control, selectively and intermittently, flow of stream B from said channel exit orifice and thereby intermittently interrupt or modulate the flow of said stream B from the orifice relative to one or more other resin streams (14, 16) elsewhere being introduced into the apparatus.

2. The apparatus according to claim 1, wherein there is no die wall in contact with said die member (31) adjacent to and downstream of the said exit orifice.

3. The apparatus according to claim 1 or claim 2, wherein there is a downstream-most point of contact (31a) between the movable means (18a) and the die member (31) and there is no downstream structure in the apparatus in contact with said point of contact.

4. The apparatus according to claim 1, 2 or 3, wherein the control assembly is operative at or adjacent to the mouth (150, 150″, 15″″) of the die apparatus.

5. A die apparatus for extruding a multi-layer tubular parison to be blow-moulded in a blow-molding machine, which die apparatus has a plurality of liquid-state resin stream channels (e.g. 20, 40, 50) for resins including resin stream B, a resin stream combining channel (20a, 34) having a combining area (MA) and a die mouth (150, 150″, 150‴) from which an extruded parison issues, wherein the apparatus further comprises a resin stream control/shut-off assembly therein to control resin stream B, which includes:

a) a die member (31),

b) movable means (18a) cooperative with the die member,

c) a resin channel portion (40) formed by the die member (31) and the movable means (18a) for channelling flow of resin stream (B) (12) therebetween; wherein said movable means (18a) is selectively movable toward, against and away from the die member (31) for selective and intermittent reduction, shut-off or increase of resin stream (12) flow through the channel portion (40) without controlling or shutting-off either (a) the flow of another resin stream (e.g. 14) through another resin stream channel (e.g. 50) of the die apparatus, or (b) the flow of any other resin stream through the apparatus.

6. An extrusion die head for forming a tubular multi-layer extrudate from a plurality of resins N where N includes resin(s) B (12), a resin control mechanism within said die head (800) comprising cooperative surfaces (26, 28) which define a reservoir having an exit orifice for a stream (12) of resin(s) B fed into the reservoir, and movable means (18a) operable to move one or both of the said surfaces (26, 28) to increase the volume of said reservoir and thereby during said intermittent periods effectively reduce or prevent the flow of resin(s) B through the said exit orifice and from the die head (800).

7. A die for continuously producing a multi-layer tubular parison, the die having a plurality of channels (20, 40, 50) for conveying and combining into said multi-layer parison a plurality of resin(s) N, wherein resins N include resin(s) B, and said plurality of channels include a channel (40) for resin(s) B (12) and wherein only resin(s) B are initially conveyed in the channel (40) for resins B, and the die further includes control means (18a, 31) within the die for controlling the volume of flow of resin(s) B at a location (31a) upstream of the area (MA) where resin(s) B is or are combined with any other of said resin(s) N.

8. The die according to claim 6 or claim 7, wherein the die has a mouth (150, 150″, 150‴) and the said control means is located adjacent the mouth.

9. The die according to claim 6, 7 or 8, wherein the said control means includes movable means (18a) operable to move relative to channel B to control the volume of flow of resin(s) B at said location (31a).

10. A die head extruding a multi-layer extrudate parison from multiple resin streams passing through the die head, which comprises:

a die mouth (150, 150″, 150‴),

a combining channel (20a, 34) in communication with the die mouth, the channel (20a, 34) having a combining area (MA) where multiple resin streams (e.g. 12, 14, 16) are combined,

a first channel (e.g. 20) for channelling flow of a first resin stream (16) to the combining channel (20a, 34) to the die mouth,

a second channel (e.g. 40) having anm exit orifice in communication with the combining channel (20a, 34) for channelling flow of a second resin stream (12) through its exit orifice into the combining area (MA), said exit orifice having a downstream movable lip (31a) to control flow through the exit orifice wherein in said die head there is no additional structure downstream of the lip (31a) in the flow path of the resin stream (14) flowing from the exit orifice toward the mouth.

11. The die head according to claim 10, wherein there is included a third channel (50, 52) downstream of the second channel (40) and having a downstream orifice in communication with the combining channel (20a, 34) for channelling flow of a third resin stream (14) into the combining channel, said third channel orifice having an upstream lip radially offset from the upstream lip (18a) of the second channel (40), wherein the flow path of the third resin stream (14) flowing in the combining channel (20a, 34) prevents the second resin (12) from contacting any die head structure downstream of the exit orifice of the second channel (40).

12. The die head according to claim 10 or claim 11, wherein the second channel (40) adjacent its orifice is defined by a wall surface (28) positioned at a converging angle in an upstream direction toward and communicates with the upstream lip (31a) of the second channel orifice, and the means for preventing flow through the orifice of the second channel (40) includes a movable element (18a) which has a wall surface (26) positioned at a similar angle in an upstream direction toward the mouth, said angular wall surface (26, 28) being juxtaposed from and cooperative with each other for preventing, reducing or increasing flow therebetween and from the second channel orifice.

13. A die head for extruding a multi-layer extrudate from mutliple resin streams passing through the die head, which comprises:

a die mouth (150, 150″, 150‴),

a combining channel (20a, 34) communicating with the die mouth and having a combining area (MA) where multiple streams are combined,

a first channel (e.g. 20) for channelling flow of a first stream (e.g. 16) to the combining channel (20a, 34),

a second channel (e.g. 40) having an exit orifice for channelling flow of a second stream (e.g. 12) through its exit orifice into the combining area (MA), the exit orifice being defined in part by an upstream lip (31a) and an upstream wall surface (28) which angles in a downstream direction toward the combining channel (MA),

a movable element (18a) having an upstream end portion to move toward, against, and away from said upstream surface (28) such that when the upper end portion of the movable element is against said surface (28), flow through the orifice is thereby cut-off, and such that when the upper end portion of the movable element (18a) is moved toward or away from the wall surface (28), flow through the orifice is reduced or increased,

the said exit orifice being defined in part by an upstream end portion (26) of a movable element (18a), and

the die head being adapted such that there is no channel wall extending in an upstream direction from the lip (31a) which, in use, would be in the flow path of and would contact the stream (12) flowing from the second channel (40).

14. A resin control assembly within an extrusion die head which combines a plurality of resins N, one or more of which are resin(s) B, comprised of a die element (31) and a movable element (18a) each having cooperative surfaces (28, 26) adapted to intermittently abut one another within the die at a point of contact (31a), in use thereby to control or terminate flow of resin(s) B, there being no structure extending downstream of the said point of contact (31a) in the flow path of resin(s) B, the said point of contact (31a) for example being at or adjacent the mouth (150, 150", 150''') of the die head.

15. A resin shut-off or control apparatus for use in a multi-layer extrusion die head, to render the die head suitable for forming an extrudate having alternating sections including sections which are blow-moldable in one or more molds into multi-layer containers, and flash or scrap sections substantially devoid of selected layers which are present in the sections used to form the containers, the said apparatus comprising flow control means for controlling flow of at least one resin stream (e.g. B, 12) such that it is substantially absent from the flash or scrap sections, said flow control means including movable means (18a) and means (31) cooperative with the movable means (18a) and forming between them an orifice whose gap is variable by movement of the movable means (18a) and with respect to which at least one of the resin streams (e.g. B, 12) intermittently is allowed to flow through fully or else is partially or fully prevented from flowing through the orifice, and - optionally but preferably - there is no structure downstream of the orifice in the flow path which would cause drag of the flow of the resin stream(s) (e.g. 40) which, in operation, exit the said orifice.

16. Apparatus according to any of claims 1, 6, 13 or 15 in which the resin channel (40) of stream B is an annular channel and the movable means (18a) is a ring piston having a pointed free edge.

17. A method of forming a multi-layer extrudate for blow molding, comprising the steps of:

(a) introducing into an extrusion die head a plurality of resins N;

(b) combining the resins to form a multi-layer extrudate with a section X of a desired length and comprised of the said resins N in layers;

(c) then, at selected intervals, within the die head, shutting off the flow of at least one but not all of the resin streams N while the die head is extruding the extrudate, thereby forming the extrudate with a section Y of a desired length comprised of the remaining ones of the plurality of the said resins N;

(d) and then repeating steps (a), (b) and (c), so as to form an extrudate having alternating sections X and Y.

18. A method for extruding from an extrusion die head a multi-layer extrudate as a parison, and feeding a portion of the parison to a blow mold for forming an extrusion blow-molded container from a selected section X of the parison leaving a parison flash section Y beyond the mold, the method comprising:

(a) introducing into the die head a plurality of resins N, which include one or more separately introduced resin(s) B,

(b) combining the resins N to form a multi-layer parison section X of a desired length comprised of layers formed from resins N;

(c) then, at selected intervals, within the die head, controlling the flow of resin(s) B to prevent resin(s) B from combining with the other resin(s) N, thereby forming a multi-layer parison section Y of a selected length comprised of layers formed from resins N minus resin(s) B;

(d) feeding a parison to a blow mold for forming an extrusion blow molded container;

(e) and repeating said steps (a), (b), (c), (d) and (e), so as to form a multi-layer parison having alternating sections X and Y, and multi-layer containers from the said section X.

19. The method according to claim 18, wherein the resin(s) B whose flow is in the form of a stream which has a trailing end and an adjacent marginal end portion just after the preventing step (c) is effected, and wherein there is included the step of avoiding or minimising contact between the marginal end portion and structure or stagnant polymer after said controlling step (c) is effected.

20. The method according to claim 4 or claim 5, further including the steps of utilising the parison sections Y as scrap, regrinding the scrap and introducing the scrap into the die as one or more of the resins N.

21. The method according to claim 18 or claim 19 wherein the resin(s) B comprise an oxygen barrier material.

22. The method according to claim 21 wherein the oxygen barrier material is present in sections X but is absent, or substantially absent, from sections Y.

23. The method according to claim 18 or claim 19, wherein sections X contain EVOH, or methyl acrylate vinylidene chloride, but sections Y do not contain a layer of EVOH, polyvinylidene chloride or methyl acrylate vinylidene chloride.

24. The method according to claim 19, wherein the amount of contact is minimized to be no greater than that which will produce the amount of the layer desired to appear in section Y.

25. The method according to any of claims 18 to 24, which further includes the steps of:

(a) introducing regrind of sections Y into the die to become part or all of at least one of the layers of parison section(s) X;

(b) passing the parison section X into a blow mold of a blow-molding apparatus for forming a container;

(c) closing the mold to capture the section X within the blow mold; and

(d) thereafter blowing the captured section X into the container.

26. A method of forming an extrusion blow-molded multi-layer container comprising:

(a) using a die to form a continuous tubular multi-layer parison having alternating sections X and Y, wherein sections X contain a plurality of layers N and sections Y at least in part contain less than all the layers N;

(b) passing the parison to a blow-molding apparatus so that portions X are encaptured by spaced-apart molds arranged in series such that the sections Y extend between such molds;

(c) removing the portions Y from between the molds and regrinding the same; and

(d) introducing the regrind into the die to become part or all of at least one of said layers of said continuous parison sections X.

27. A method of forming multi-layer extrusion blow-molded containers comprising introducing a plurality of resins N to an extrusion die, interrupting flow of at least one of the resins N, extruding a continuous tubular multi-layer parison having alternating sections X with all of the layers N, and sections Y having portions with less than all of the layers N and formed from less than all of said resins N, and forming the containers only from sections X.

28. An extrusion blow-molded multi-layer container formed by blow-molding a parison exiting from an extrusion die by means of a blow-molding apparatus having one or more molds, wherein said parison had (a) alternating sections X which contain all layers formed from all the resins introduced into the die and wherein all or a portion of each section X is encaptured in a mold to form the container, and (b) alternating sections Y which contain portions having less than all of said layers, and wherein sections Y are flash between, beyond or outside of the mold(s), wherein the container so-formed from a section X includes a layer containing regrind of the flash from one or more sections Y, and wherein, optionally, the container has at least one wall layer which varies in thickness.

FIG. I

EP 0 370 695 A2

# FIG.1A

# FIG.1B

FIG.IC

FIG.ID

FIG. 2

FIG.3

FIG.3A

FIG.4

FIG.5

FIG.6

FIG.6A

FIG.7

FIG.8

FIG.9

FIG.10

FIG.11

FIG.12

FIG.13

FIG.14

FIG.15

15    15

700

FIG.16

FIG.17

17    17

800

J  I  H  G

O  N  M  L  K

FIG. 18

950

20 20

FIG.19

310
326
328
324
328'
320
318
326
12 322

FIG.20

952 953
951 956
957
980
981
954 955